# EUROPEAN PATENT APPLICATION

(11) **EP 2 777 866 A2**
(43) Date of publication of application: **17.09.2014**
(21) Application number: 14157812.0
(22) Date of filing: 05.03.2014
(51) Int. Cl.: B23K 35/30

(54) **Suppport structure with dissimilar metal welds**

(30) Priority: 11.03.2013 US 201313792573
(71) Applicant: General Electric Company, Schenectady, New York 12345 (US)
(72) Inventor: Johnston, Jr., Bill Damon, Greenville, SC 29615 (US); Schick, David Edward, Greenville, SC 29615 (US)
(74) Representative: Szary, Anne Catherine

(57) **Abstract**

A support structure (100) for a gas turbine exhaust system having an exterior shell (102), an interior liner (112), and insulation (114) therebetween, the support structure (100) including a support bar (104) welded to the exterior shell (102), wherein the support bar weld (106) includes a first filler material including a carbon steel filler material. The support structure (100) further including a stud (108) welded to the support bar (116) and coupled to the interior liner (112), wherein the stud weld (110) includes a second filler material including a low percentage of chromium.

## Description

### BACKGROUND OF THE INVENTION

The disclosure relates generally to fatigue resistant dissimilar metal welds in gas turbine exhaust systems with insulation support structures.

In some known gas turbine exhaust systems, interior liners are secured to an exterior shell in the insulation support structure of the gas turbine exhaust systems. In some of these cases, metal studs are used to secure the internal liner, often welded in at least one place. In some cases the interior liner may become loose within the gas turbine exhaust system because the welds may loosen over time. This situation can result in an increase in maintenance costs or a need for replacement parts.

### BRIEF DESCRIPTION OF THE INVENTION

Embodiments of the invention disclosed herein may include a support structure for a gas turbine exhaust system having an exterior shell, an interior liner, and insulation therebetween, the support structure comprising: a support bar welded to the exterior shell, wherein the support bar weld includes a first filler material including a carbon steel filler material; and a stud welded to the support bar and coupled to the interior liner, wherein the stud weld includes a second filler material including a low percentage of chromium.

Embodiments of the invention may also include a support structure for a gas turbine exhaust system having an exterior shell, an interior liner, and insulation therebetween, the support structure comprising: a support bar welded to the exterior shell, wherein the support bar comprises a 300 series stainless steel and the support bar weld includes a first filler material including a low percentage of chromium; and a stud welded to the support bar and coupled to the interior liner, wherein the stud weld includes a second filler material including a 300 series stainless steel filler material.

### BRIEF DESCRIPTION OF THE DRAWING

These and other features of the disclosure will be more readily understood from the following detailed description of the various aspects of the invention taken in conjunction with the accompanying drawings that depict various aspects of the invention.

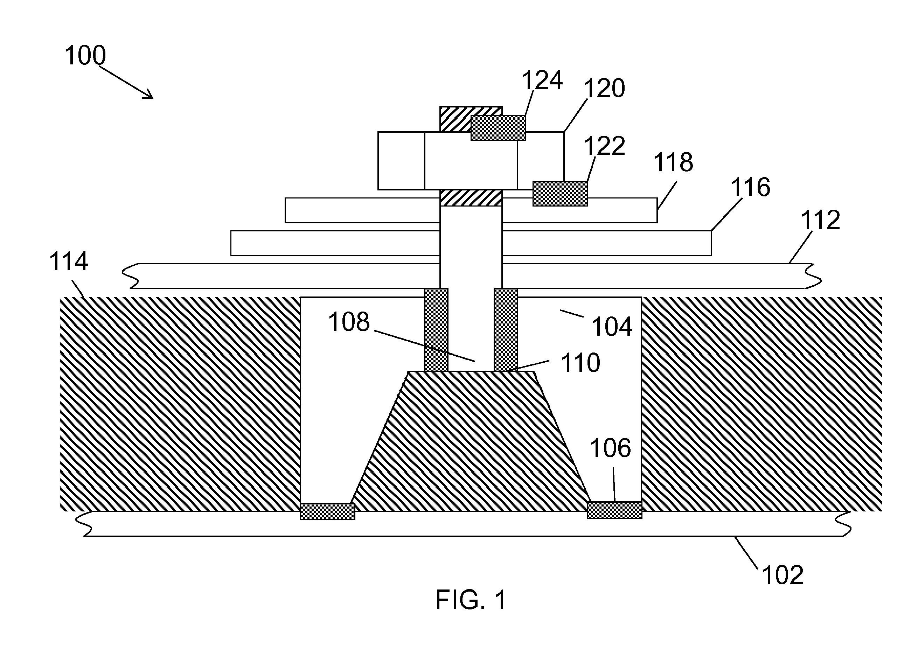

FIG. 1 shows a schematic diagram of an example of a portion of a gas turbine exhaust system that may include embodiments of the invention disclosed herein.

It is noted that the drawings may not be to scale. The drawings are intended to depict only typical aspects of the invention, and therefore should not be considered as limiting the scope of the invention. In the drawings, like numbering represents like elements between the drawings. The detailed description explains embodiments of the invention, together with advantages and features, by way of example with reference to the drawings.

### DETAILED DESCRIPTION OF THE INVENTION

As described herein, gas turbine exhaust systems can include internal supports, for instance insulation support structures, within the systems. Insulation support structures are often used to house a layer of insulation between an exterior shell and an interior liner. Since temperatures of the gas turbine exhaust systems can exceed approximately 538°C (about 1000°F), including insulation between an interior liner and an exterior shell may be desirable to reduce the surface temperature of the exterior shell. As such, a support structure is needed to contain the insulation and to maintain the placement of the interior liner with respect to the exterior shell. The insulation support structure may consist of support bars welded to the exterior shell of the gas turbine exhaust system. The support bars may be further welded to studs which can be mechanically connected to the interior liner, with insulation provided between the interior liner and the exterior shell. Support structure and insulation support structure are used interchangeably herein.

FIG. 1 is a schematic diagram of a support structure 100 for a gas turbine exhaust system according to some embodiments. In one embodiment, support structure 100 includes fatigue resistant dissimilar metal welds (DMWs), as will be described herein. In the embodiment shown, insulation support structure 100 may include an exterior shell 102. A support bar 104, sometimes referred to as a scallop bar due to the roughly scallop shaped edge used for structural integrity and optimal welding surfaces, may be welded to exterior shell 102 at a support bar weld 106 using a first filler material. The filler material may include a carbon steel filler material.

Support structure 100 may also include a stud 108 which may be welded to support bar 104, the stud weld 110 may use a second filler material such as a filler material with a low percentage of chromium, for instance less than about 23% chromium content by weight. Further, the filler material may contain less than about 9% chromium content. Traditional filler materials frequently made use of 309 stainless steel, which typically has about 24% chromium, so a "low percentage of chromium" means filler materials with a lower chromium content than that of 309 stainless steel.

Stud 108 may extend through an interior liner 112. Insulation 114 may be included between interior liner 112 and exterior shell 102, providing an insulation support structure 100 for the gas turbine exhaust system, housing insulation between interior liner 112 and exterior shell 102 while maintaining their relative positions to one another.

Exterior shell 102 may consist of a carbon steel. Support bar 104, of which there may be one or more, often consists of 400 series stainless steel. In some cases, support bar 104 is comprised of 409 stainless steel. Stud 108 may consist of 300 series stainless steel, for instance 304 stainless steel. Due to the differences in the compositions of these components, welds may loosen or break over a period of time. Welds between austenitic alloys, such as 300 series stainless steel, and ferritic alloys, such as 400 series stainless steel, are inherently DMWs, as the two alloy types have a different crystal structure, different chemistry, and different properties. Further complicating the integrity of the welds, exposure to temperatures of approximately 427°C (about 800°F) and higher result in chemistry differences which can cause carbon to diffuse from the 400 series stainless steel ferritic alloy with a lower chromium composition to the 300 series stainless steel austenitic alloy which has a higher chromium composition. The chromium levels of different alloys are known, however, 304 stainless steel has approximately 19% chromium and 309 stainless steel may have approximately 24% chromium. Conversely, 409 stainless steel typically has approximately 11 % chromium.

It has been discovered that carbon diffusion in DMWs creates a number of issues. For instance, the mechanical properties will vary across the weld joint, including but not limited to differences in the coefficient of thermal expansion. This situation can create high stresses at the weld joints, resulting in premature fracture of the weld joint. The weld fusion line between two components, one being ferritic and the other being austenitic, using traditional fillers, may create a narrow portion of the ferritic metal alloy that has undergone carbon depletion, lowering the strength of that portion of the ferritic metal alloy. The same portion of the ferritic metal alloy may be subject to higher stresses due to a difference in the coefficients of thermal expansion. Further, it may be subject to accelerated corrosion due to its close proximity to the austenitic metal alloy, which is a more noble and stable alloy.

Accordingly, the goals of improving the weld strength of DMWs are threefold. First, the weld should not require post weld heat treatment (PWHT). Previous methods utilizing ferritic filler metals often require PWHT, which will move the fusion line in the weld between ferritic and austenitic alloy metals toward the austenitic alloy side of the joint. Second, the weld should inhibit the formation of a low carbon zone (LCZ). Previous fillers typically do not reduce the tendency for carbon migration. Third, the weld should be capable of meeting the elevated temperature strength requirements of the austenitic metal alloy. Again, previous filler materials may not meet the high temperature strength requirements.

In one embodiment, changing the filler material traditionally used for such welds can increase the strength of the weld. For instance, stud weld 110, which is between stud 108, which may be a 300 series stainless steel, and support bar 104, which may be a 400 series stainless steel, may utilize a lower chromium filler metal for the weld. Previously, the filler material would typically consist of a 300 series stainless steel, often 309 stainless steel. A filler material with a lower chromium content than the traditional 309 stainless steel filler may provide retention of carbon in the ferritic metal alloy (support bar 104). Use of a lower chromium filler material fulfills all three goals outlined previously. Such lower chromium filler materials include filler metals with a chromium content of less than approximately 9%, and in some cases may include a chromium content of about 5% to 9%. Such filler materials may include, but are not limited to, Electric Power Research Institute (EPRI) P87 and Hastelloy W. These filler materials are known in the art and contain a lower chromium content than previous materials. For instance, 309 stainless steel filler material typically has a chromium content of approximately 24% by weight. EPRI P87 is nickel-iron alloy. It has a chromium content of approximately 9% by weight. Hastelloy W is a superalloy largely composed of nickel and has a chromium content of approximately 5% by weight.

In this embodiment, the new lower chromium filler material provides a stronger weld joint at stud weld 110. A further advantage to this embodiment is that welds in insulation support structures of gas turbine exhaust systems already deployed in the field can be welded with the lower chromium filler material using the currently manufactured parts. This allows for altering a stronger weld to existing structures already in use. This embodiment may further include changing the filler material of support bar weld 106 to a carbon steel filler material. One such filler material includes E7018.

Further referring to FIG. 1, stud 108, which as previously described may extend through an interior liner 112, may further extend through a bar 116 and a washer 118 for further structural support. In order to couple interior liner 112 to stud 108, stud 108 may be threaded at one end. In such an embodiment, a nut 120 may be screwed onto stud 108 above washer 118, mechanically securing interior liner 112 to stud 108 against support bar 104. Nut 120 may be welded to washer 118 at nut weld 122 to keep nut 120 from loosening over time. Nut 120 may further be welded to stud 108 at nut/stud weld 124 for further protection from loosening as well.

Interior liner 112, bar 116, and washer 118 may be comprised of 400 series stainless steel. Nut 120 may comprise 300 series stainless steel. Insulation 114 between interior liner 112 and exterior shell 102 provides heat insulation from the inside of the gas turbine exhaust system with insulation support structure 100. As such, there may exist a considerable temperature difference between the area of insulation closest to interior liner 112 and exterior shell 102. For instance, close to interior liner 112, the temperature may reach approximately 538°C (about 1000°F). Conversely, close to exterior shell 102 the temperature may be approximately 93°C (about 200°F).

In an alternative embodiment, the DMWs may be moved to the lower temperature portion of support structure 100. For example, by changing support bar 104 from a 400 series stainless steel to a 300 stainless steel, stud weld 110 is no longer a DMW, which is in the high temperature area. Accordingly, stud weld 110 can utilize a filler material such as 309 or 347 stainless steel filler material. However, this may cause issues with support bar weld 106, which is in a lower temperature area. In the lower temperature area, carbon migration is, however, much less of a concern. Accordingly, replacing the filler material of the support bar weld 106 with a lower chromium filler material can lower stresses at the weld by utilizing a material with a coefficient of thermal expansion that is intermediate between the support bar 104 and the exterior shell 102. The filler material for support bar weld 106 in this embodiment may include filler metals with a chromium content of less than about 23%, and in some cases may include a chromium content of approximately 13% to 22%. These filler metals may have a coefficient of thermal expansion that is close to that of ferritic metal alloys. Such filler materials may include, but are not limited to, Inco 82, Inco 182, EPRI P87, and Hastelloy W. Inco 82 and Inco 182 are similar filler materials to EPRI P87 and Hastelloy W, which are described above, but have a slightly higher chromium content (13-22%). However, the coefficient of thermal expansion of Inco 82 and Inco 182 is much closer to ferritic metal alloys, making their relatively higher chromium content than the other filler materials less of a problem for this embodiment. Inco 82 is for use in tungsten inert gas (TIG) welding, while Inco 182 is used in shielded metal arc welding, or stick welding.

Replacing the 400 series stainless steel of scallop bar 104 with a 300 series stainless steel and moving the DMWs to the lower temperature region may be more costly, as these changes may not be possible on existing systems. However, original manufacturing of these systems may provide for stronger welds within insulation support structure 100 of gas turbine exhaust systems.

The coefficient of thermal expansion of certain materials is referenced above. These are known numbers, however for clarity, 304 stainless steel is typically about 10.5, 309 stainless steel is greater than approximately 10, while 409 stainless steel is typically about 6.8. These values are for temperatures up to approximately 538°C (about 1000°F), and are given in the unit 10⁻⁶/°F

While embodiments have described certain specific 300 series and 400 series stainless steel, these examples are not meant to be limiting. Use of 300 series and 400 series stainless steel is intended to include any now known or later developed 300 series and 400 series stainless steel.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A support structure for a gas turbine exhaust system having an exterior shell, an interior liner (112), and insulation therebetween, the support structure comprising:
a support bar (116) welded to the exterior shell, wherein a support bar weld includes a first filler material including a carbon steel filler material; and
a stud (108) welded to the support bar and coupled to the interior liner, wherein a stud weld includes a second filler material including a low percentage of chromium.

2. The support structure of claim 1, wherein the second filler material has a chromium content of less than about 9%.

3. The support structure of claim 1 or claim 2, wherein the second filler material is chosen from a group consisting of: filler metals with a chromium content of approximately 5% to 9%.

4. The support structure of any preceding claim, wherein the first filler material consists of E7018.

5. The support structure of any preceding claim, wherein the exterior shell comprises a carbon steel.

6. The support structure of any preceding claim, wherein the support bar comprises a 400 series stainless steel.

7. A support structure for a gas turbine exhaust system having an exterior shell, an interior liner, and insulation therebetween, the support structure comprising:
a support bar welded to the exterior shell, wherein the support bar comprises a 300 series stainless steel and a support bar weld includes a first filler material including a low percentage of chromium; and
a stud welded to the support bar and coupled to the interior liner, wherein a stud weld includes a second filler material including a 300 series stainless steel filler material.

8. The support structure of claim 7, wherein the second filler material is chosen from a group consisting of: 309 stainless steel and 347 stainless steel.

9. The support structure of claim 7 or claim 8, wherein the first filler material has a chromium content of less than about 23%.

10. The support structure of any of claims 7 to 9, wherein the first filler material is chosen from a group consisting of: filler metals with a chromium content of approximately 13% to 22% and a coefficient of thermal expansion close to that of ferritic metals.

11. The support structure of any one of claims 7 to 9, wherein the first filler material has a chromium content of less than about 9%.

12. The support structure of claim 11, wherein the first filler material is chosen from a group consisting of: filler metals with a chromium content of approximately 5% to 9%.

13. The support structure of any one of claims 7 to 12, wherein the exterior shell comprises a carbon steel.
